# EUROPEAN PATENT APPLICATION

(11) **EP 3 424 981 A1**
(43) Date of publication of application: **09.01.2019**
(21) Application number: 17759876.0
(22) Date of filing: 27.02.2017
(51) Int. Cl.: C08G 69/02, C08L 77/02, C08L 77/06

(54) **POLYAMIDE RESIN AND FILM COMPRISING SAME**

(30) Priority: 03.03.2016 JP 2016040705
(71) Applicant: UBE Industries, Ltd., Ube-shi, Yamaguchi 755-8633 (JP)
(72) Inventor: MAEDA Shuichi, Ube-shi Yamaguchi 755-8633 (JP); NAKAGAWA Tomoyuki, Ube-shi Yamaguchi 755-8633 (JP); WADA Shusaku, Ube-shi Yamaguchi 755-8633 (JP); HANAOKA Yasunari, Ube-shi Yamaguchi 755-8633 (JP)
(74) Representative: Hoffmann Eitle
(86) International application number: PCT/JP2017/007345
(87) International publication number: WO 2017/150410

(57) **Abstract**

Provided is a polyamide resin having excellent heat shrinkability. A polyamide resin which contains three or more types of units, wherein the polyamide resin comprises (A) units derived from a lactam and/or an aminocarboxylic acid, and (B) units derived from an equimolar salt of a diamine and a dicarboxylic acid, wherein (B) the units derived from an equimolar salt of a diamine and a dicarboxylic acid comprise (B-1) units having no alicyclic structure and (B-2) units having an alicyclic structure.

## Description

### FIELD OF THE INVENTION

The present invention relates to a polyamide resin and a film comprising the same.

### BACKGROUND ART

A polyamide resin is excellent in mechanical strength, thermal properties, chemical properties, and gas barrier properties, and therefore has been used as a packaging material for foods, such as boil-in-the-bag foods. Recently, as the use of the polyamide resin as the food packaging material is expanding, the required properties are being diversified and properties at higher levels are demanded. In the use as a packaging material for processed meat products, such as ham and sausage, and for moist foods, which is one of the food packaging uses, there is desired a polyamide film which is thin and which, while maintaining the practical mechanical strength and gas barrier properties, has excellent heat shrinkability such that a packaging material formed from the polyamide film shrinks due to heating to enable easy tight packaging of the contents.

There have been disclosed a polyamide resin and a polyamide film which can improve the heat shrinkability of a polyamide film. As a polyamide resin which can improve the heat shrinkability, a polyamide copolymer comprising ε-caprolactam, an aliphatic diamine, such as hexamethylenediamine, and an aromatic dicarboxylic acid, such as terephthalic acid or isophthalic acid, has been disclosed (see, for example, patent document 1).

### PRIOR ART REFERENCE

### Patent Document

Patent document 1: Japanese Unexamined Patent Publication No. Sho 62-227626

### SUMMARY OF THE INVENTION

### Problems to be Solved by the Invention

However, a polyamide film which can further improve the tight packaging for the contents and a polyamide resin which can provide such a film are desired.

An object of the present invention is to provide a polyamide resin having excellent heat shrinkability and a film comprising the same.

### Means for Solving the Problems

The present inventor has found that a specific polyamide resin having units derived from a diamine or a dicarboxylic acid having an alicyclic structure in the molecular chain thereof has excellent heat shrinkability, and the present invention has been completed.

Specifically, the present invention is directed to:
a polyamide resin containing three or more types of units, wherein the polyamide resin comprises:
(A) units derived from a lactam and/or an aminocarboxylic acid; and
(B) units derived from an equimolar salt of a diamine and a dicarboxylic acid, wherein (B) the units derived from an equimolar salt of a diamine and a dicarboxylic acid comprise:
   (B-1) units having no alicyclic structure; and
   (B-2) units having an alicyclic structure.

### Effects of the Invention

In the present invention, there can be provided a polyamide resin having excellent heat shrinkability and a film comprising the same. The film comprising the polyamide resin of the present invention has excellent stretchability. The stretched film comprising the polyamide resin of the present invention has excellent heat shrinkability, and therefore can be advantageously used as a packaging material, particularly as a food packaging material.

### MODE FOR CARRYING OUT THE INVENTION

In the present specification, the range of values indicated using the preposition "to" means a range of values including the respective values shown before and after the preposition "to" as the minimum value and the maximum value. Further, with respect to the amount of the component contained in the composition, when a plurality of materials corresponding to the components are present in the composition, the amount of the components in the composition means the total amount of the materials present in the composition unless otherwise specified.

The polyamide resin of the present invention is a polyamide resin containing three or more types of units, wherein the polyamide resin comprises:
(A) units derived from a lactam and/or an aminocarboxylic acid; and
(B) units derived from an equimolar salt of a diamine and a dicarboxylic acid, wherein (B) the units derived from an equimolar salt of a diamine and a dicarboxylic acid comprise:
   (B-1) units having no alicyclic structure; and
   (B-2) units having an alicyclic structure.

### [(A) Units derived from a lactam and/or an aminocarboxylic acid]

(A) Units derived from a lactam and/or an aminocarboxylic acid contained in the polyamide resin can be introduced into the polyamide resin by subjecting a lactam and/or an aminocarboxylic acid to polymerization.

Examples of lactams include ε-caprolactam, ω-enanthlactam, ω-undecalactam, ω-dodecalactam, and 2-pyrrolidone, and at least one member selected from the group consisting of these lactams is preferred.

Examples of aminocarboxylic acids include 6-aminocaproic acid, 7-aminoheptanoic acid, 8-aminooctanoic acid, 10-aminocapric acid, 11-aminoundecanoic acid, and 12-aminododecanoic acid, and at least one member selected from the group consisting of these aminocarboxylic acids is preferred.

These lactams and aminocarboxylic acids may be used individually, or two or more types of them may be used appropriately in combination. When a lactam and an aminocarboxylic acid are used in combination, they can be used in the form of a mixture in an arbitrary ratio.

The amount of (A) the units derived from a lactam and/or an amino carboxylic acid contained in the all units of the polyamide resin is, for example, 50 to 98% by weight, preferably 55 to 90% by weight, more preferably 60 to 88% by weight. When the amount of the units derived from a lactam and/or an aminocarboxylic acid is the above-mentioned lower limit or more, the mechanical strength tends to be further improved. When the amount of the units derived from a lactam and/or an aminocarboxylic acid is the above-mentioned upper limit or less, the stretchability and heat shrinkability tend to be further improved.

### [(B) Units derived from an equimolar salt of a diamine and a dicarboxylic acid]

The polyamide resin contains, as (B) units derived from an equimolar salt of a diamine and a dicarboxylic acid, (B-1) units having no alicyclic structure and (B-2) units having an alicyclic structure. The units derived from an equimolar salt of a diamine and a dicarboxylic acid are units formed by subjecting an equimolar salt or equimolar mixture of a diamine and a dicarboxylic acid to polymerization, and a combination of one type of a diamine and one type of a dicarboxylic acid is regarded as one type of units. The diamine and the dicarboxylic acid constituting the units may be directly condensed or condensed through other units or a diamine or dicarboxylic acid constituting other units.

### (B-1) Units having no alicyclic structure

(B-1) Units having no alicyclic structure contained in the polyamide resin are units which are derived from an equimolar salt or equimolar mixture of a diamine and a dicarboxylic acid, and which have no alicyclic structure, and are formed by subjecting to polymerization a diamine other than the diamines having an alicyclic structure and a dicarboxylic acid other than the dicarboxylic acids having an alicyclic structure.

Examples of diamines other than the diamines having an alicyclic structure include linear aliphatic diamines, such as ethylenediamine, tetramethylenediamine, hexamethylenediamine, nonamethylenediamine, undecamethylenediamine, and dodecamethylenediamine; branched aliphatic diamines, such as 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2,3-dimethyl-1,4-butanediamine, 2-methyl-1,5-pentanediamine, 3-methyl-1,5-pentanediamine, 2,2-dimethyl-1,6-hexanediamine, 2,5-dimethyl-1,6-hexanediamine, 2,4-dimethyl-1,6-hexanediamine, 3,3-dimethyl-1,6-hexanediamine, 2,2,4-trimethyl-1,6-hexanediamine, 2,4,4-trimethyl-1,6-hexanediamine, 2,4-diethyl-1,6-hexanediamine, 2-methyl-1,7-heptanediamine, 2,2-dimethyl-1,7-heptanediamine, 2,3-dimethyl-1,7-heptanediamine, 2,4-dimethyl-1,7-heptanediamine, 2,5-dimethyl-1,7-heptanediamine, 2-methyl-1,8-octanediamine, 3-methyl-1,8-octanediamine, 4-methyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, and 5-methyl-1,9-nonanediamine; and aromatic diamines, such as p-phenylenediamine, m-phenylenediamine, p-xylylenediamine, m-xylylenediamine, 2,4-tolylenediamine, 2,6-tolylenediamine, 1,4-diaminonaphthalene, 1,8-diaminonaphthalene, 2,3-diaminonaphthalene, 2,6-diaminonaphthalene, 3,3'-diaminodiphenylmethane, 3,4'-diaminodiphenylmethane, 4,4'-diaminodiphenylmethane, 4,4'-diamino-3,3'-dimethyldiphenylmethane, 4,4'-diamino-3,3'-diethyldiphenylmethane, 4,4'-diamino-3,3',5,5'-tetramethyldiphenylmethane, 4,4'-diamino-3,3',5,5'-tetraethyldiphenylmethane, 4,4'-diamino-3,3'-dimethyl-5,5'-diethyldiphenylmethane, 2,2'-bis(3-aminophenyl)propane,2,2'-bis(4-aminophenyl)propane, 2,2'-bis(-methylphenyl)propane,2,2'-bis(4-amino-3-ethylphenyl)propane, 2,2'-bis(4-amino-3,5-dimethylphenyl)propane, 2,2'-bis(4-amino-3,5-diethylphenyl)propane, and 2,2'-bis(4-amino-3-methyl-5-ethylphenyl)propane, preferred is at least one member selected from the group consisting of these diamines, and more preferred is at least one member selected from linear aliphatic diamines.

These diamines may be used individually, or two or more types of them may be used appropriately in combination.

Examples of dicarboxylic acids other than the dicarboxylic acids having an alicyclic structure include linear aliphatic dicarboxylic acids, such as adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid, and eicosanedioic acid; branched aliphatic carboxylic acids, such as dimethylmalonic acid, 3,3-dimethylsuccinic acid, 2,2-dimethylglutaric acid, 2-methyladipic acid, 3-methyladipic acid, trimethyladipic acid, 2-butyloctanedioic acid, 2,3-dibutylbutanedioic acid, 8-ethyloctadecanedioic acid, 8,13-dimethyleicosanedioic acid, 2-octylundecanedioic acid, and 2-nonyldecanedioic acid; and aromatic dicarboxylic acids, such as isophthalic acid, terephthalic acid, 1,4-naphthalenedicarboxylic acid, 1,8-naphthalenedicarboxylic acid, 2,6-naphthalenedicarboxylic acid, 2,7-naphthalenedicarboxylic acid, 4,4'-biphenyldicarboxylic acid, diphenylmethane-2,4-dicarboxylic acid, diphenylmethane-3,3'-dicarboxylic acid, diphenylmethane-3,4'-dicarboxylic acid, and diphenylmethane-4,4'-dicarboxylic acid, preferred is at least one member selected from the group consisting of these dicarboxylic acids, and more preferred is at least one member selected from linear aliphatic dicarboxylic acids.

These dicarboxylic acids may be used individually, or two or more types of them may be used appropriately in combination.

### (B-2) Units having an alicyclic structure

(B-2) Units having an alicyclic structure contained in the polyamide resin are units which are derived from an equimolar salt or equimolar mixture of a diamine and a dicarboxylic acid, and which have an alicyclic structure at at least one of the diamine and the dicarboxylic acid, and, for example, are formed by subjecting to polymerization an equimolar salt or equimolar mixture of a dicarboxylic acid and a diamine having an alicyclic structure, or an equimolar salt or equimolar mixture of a diamine and a dicarboxylic acid having an alicyclic structure.

Examples of diamines having an alicyclic structure include alicyclic diamines, such as cyclopropanediamine, cyclopropyldiaminomethyl, cyclobutyldiaminomethyl, cyclopentyldiaminomethyl, bis(4-aminocyclohexyl)methane, bis(4-aminocyclohexyl)propane, 1,2-cyclohexanediamine, 1,3-cyclohexanediamine, 1,4-cyclohexanediamine, 1,3-bisaminomethylcyclohexane, and 1,4-bisaminomethylcyclohexane; and branched alicyclic diamines, such as 1-amino-3-aminomethyl-3,5,5-trimethylcyclohexane (hereinafter, referred to also as "isophoronediamine"), 5-amino-2,2,4-trimethyl-1-cyclopentanemethylamine, 5-amino-1,3,3-trimethylcyclohexanemethylamine, bis(4-amino-3-methylcyclohexyl)methane, bis(4-amino-3-methylcyclohexyl)propane, bis(4-amino-3-ethylcyclohexyl)methane, bis(4-amino-3,5-dimethylcyclohexyl)methane, bis(4-amino-3,5-dimethylcyclohexyl)propane, bis(4-amino-3-ethylcyclohexyl)methane, bis(4-amino-3-ethylcyclohexyl)propane, bis(4-amino-3,5-diethylcyclohexyl)methane, bis(4-amino-3,5-diethylcyclohexyl)propane, bis(4-amino-3-methyl-5-ethylcyclohexyl)methane, and bis(4-amino-3-methyl-5-ethylcyclohexyl)propane, preferred is at least one member selected from the group consisting of these diamines, more preferred is at least one member selected from branched alicyclic diamines, and further preferred is 1-amino-3-aminomethyl-3,5,5-trimethylcyclohexane.

With respect to 1-amino-3-aminomethyl-3,5,5-trimethylcyclohexane which is a branched alicyclic diamine, stereoisomers generally called a cis isomer and a trans isomer are present according to the conformation, and any of the cis and trans isomers of this diamine may be used, or a mixture of the both isomers in an appropriate ratio may be used. Specifically, the diamine having an alicyclic structure preferably contains at least one of cis-1-amino-3-aminomethyl-3,5,5-trimethylcyclohexane and trans-1-amino-3-aminomethyl-3,5,5-trimethylcyclohexane.

These diamines may be used individually, or two or more types of them may be used appropriately in combination.

Examples of dicarboxylic acids having an alicyclic structure include alicyclic dicarboxylic acids, such as 1,2-cyclohexanedicarboxylic acid, 1,3-cyclohexanedicarboxylic acid, 1,4-cyclohexanedicarboxylic acid, and dicyclohexylmethane-4,4'-dicarboxylic acid, preferred is at least one member of these dicarboxylic acids, and more preferred is 1,4-cyclohexanedicarboxylic acid.

With respect to 1,4-cyclohexanedicarboxylic acid which is an alicyclic dicarboxylic acid, stereoisomers generally called a cis isomer and a trans isomer are present according to the conformation, and any of the cis and trans isomers of this dicarboxylic acid may be used, or a mixture of the both isomers in an appropriate ratio may be used. Specifically, the dicarboxylic acid having an alicyclic structure preferably contains at least one of cis-1,4-cyclohexanedicarboxylic acid and trans-1,4-cyclohexanedicarboxylic acid, more preferably contains at least one of cis-1,4-cyclohexanedicarboxylic acid and trans-1,4-cyclohexanedicarboxylic acid wherein the cis-isomer/trans-isomer ratio is 100/0 to 51/49.

These dicarboxylic acids may be used individually, or two or more types of them may be used appropriately in combination.

The cis-isomer/trans-isomer ratio, which is the isomer ratio for the diamine and dicarboxylic acid having an alicyclic structure used in the present invention, can be determined by a nuclear magnetic resonance (NMR) method or liquid chromatography. The cis-isomer/trans-isomer ratio in the present invention indicates a cis-isomer/trans-isomer ratio (ratio in terms of % by weight) determined by high performance liquid chromatography (HPLC).

The total amount of (B) the units derived from an equimolar salt of a diamine and a dicarboxylic acid contained in the all units of the polyamide resin is, for example, 2 to 50% by weight, preferably 10 to 45% by weight, more preferably 12 to 40% by weight. When the total amount of the units derived from an equimolar salt of a diamine and a dicarboxylic acid is the above-mentioned lower limit or more, the stretchability and heat shrinkability tend to be further improved. When the total amount of the units derived from an equimolar salt of a diamine and a dicarboxylic acid is the above-mentioned upper limit or less, the crystallinity and physical properties of the resultant film tend to be further improved, so that a stretched film which is commercially advantageous can be more easily obtained.

The total of the amount of (A) the units derived from a lactam and/or an aminocarboxylic acid and the total amount of (B) the units derived from an equimolar salt of a diamine and a dicarboxylic acid contained in the all units of the polyamide resin is, from the viewpoint of the practical physical properties, preferably 90 to 100% by weight, more preferably 95 to 100% by weight, further preferably 97 to 100% by weight.

When the total amount of (B) the units derived from an equimolar salt of a diamine and a dicarboxylic acid is 2 to 50% by weight, the amount of (B-1) the units having no alicyclic structure contained in the all units of the polyamide resin is 1 to 49.9% by weight, preferably 1 to 49.5% by weight, more preferably 1 to 49% by weight. When the amount of the units having no alicyclic structure is the above-mentioned lower limit or more, practical physical properties, such as a mechanical strength, tend to be further improved. When the amount of the units having no alicyclic structure is the above-mentioned upper limit or less, the stretchability and heat shrinkability tend to be further improved.

When the total amount of (B) the units derived from an equimolar salt of a diamine and a dicarboxylic acid is 2 to 50% by weight, the amount of (B-2) the units having an alicyclic structure contained in the all units of the polyamide resin is, for example, 0.1 to 49% by weight, preferably 0.5 to 49% by weight, more preferably 1 to 49% by weight, further preferably 1.5 to 20% by weight. When the amount of the units having an alicyclic structure is the above-mentioned lower limit or more, the stretchability and heat shrinkability tend to be further improved. When the amount of the units having an alicyclic structure is the above-mentioned upper limit or less, practical physical properties, such as a mechanical strength, tend to be further improved.

The amount of (B-2) the units having an alicyclic structure is determined as follows.

When the units having an alicyclic structure contained in the polyamide resin are only diamine units, the proportion of (B-2) the units having an alicyclic structure is the sum (% by weight) of the weight of the diamine units and the weight of the equimolar dicarboxylic acid units having no alicyclic structure. Similarly, when the units having an alicyclic structure contained in the polyamide resin are only dicarboxylic acid units, the proportion of (B-2) the units having an alicyclic structure is the sum (% by weight) of the weight of the dicarboxylic acid units and the weight of the equimolar diamine units having no alicyclic structure. When the units having an alicyclic structure contained in the polyamide resin are both diamine units and dicarboxylic acid units, the proportion of (B-2) the units having an alicyclic structure is the sum (% by weight) of the weights of the portion of the diamine units and the portion of the dicarboxylic acid units, which portions are equimolar to each other. When the units having an alicyclic structure contained in the polyamide resin are both diamine units and dicarboxylic acid units wherein the diamine units and the dicarboxylic acid units are not equimolar, the proportion of (B-2) the units having an alicyclic structure is the total of the sum (% by weight) of the weights of the portion of the diamine units and the portion of the dicarboxylic acid units, which portions are equimolar to each other, and the sum (% by weight) of the weight of the remaining units having an alicyclic structure and the weight of the units having no alicyclic structure equimolar to the remaining units having an alicyclic structure.

When the total amount of (B) the units derived from an equimolar salt of a diamine and a dicarboxylic acid is 10 to 45% by weight, the amount of (B-1) the units having no alicyclic structure contained in the all units of the polyamide resin is 1 to 44.9% by weight, preferably 1 to 44.5% by weight, more preferably 1 to 44% by weight. When the amount of the units having no alicyclic structure is the above-mentioned lower limit or more, practical physical properties, such as a mechanical strength, tend to be further improved. When the amount of the units having no alicyclic structure is the above-mentioned upper limit or less, the stretchability and heat shrinkability tend to be further improved.

When the total amount of (B) the units derived from an equimolar salt of a diamine and a dicarboxylic acid is 10 to 45% by weight, the amount of (B-2) the units having an alicyclic structure contained in the all units of the polyamide resin is, for example, 0.1 to 44% by weight, preferably 0.5 to 44% by weight, more preferably 1 to 44% by weight. When the amount of the units having an alicyclic structure is the above-mentioned lower limit or more, the stretchability and heat shrinkability tend to be further improved. When the amount of the units having an alicyclic structure is the above-mentioned upper limit or less, practical physical properties, such as a mechanical strength, tend to be further improved.

When the total amount of (B) the units derived from an equimolar salt of a diamine and a dicarboxylic acid is 12 to 40% by weight, the amount of (B-1) the units having no alicyclic structure contained in the all units of the polyamide resin is 1 to 39.9% by weight, preferably 1 to 39.5% by weight, more preferably 1 to 39% by weight. When the amount of the units having no alicyclic structure is the above-mentioned lower limit or more, practical physical properties, such as a mechanical strength, tend to be further improved. When the amount of the units having no alicyclic structure is the above-mentioned upper limit or less, the stretchability and heat shrinkability tend to be further improved.

When the total amount of (B) the units derived from an equimolar salt of a diamine and a dicarboxylic acid is 12 to 40% by weight, the amount of (B-2) the units having an alicyclic structure contained in the all units of the polyamide resin is, for example, 0.1 to 39% by weight, preferably 0.5 to 39% by weight, more preferably 1 to 39% by weight. When the amount of the units having an alicyclic structure is the above-mentioned lower limit or more, the stretchability and heat shrinkability tend to be further improved. When the amount of the units having an alicyclic structure is the above-mentioned upper limit or less, practical physical properties, such as a mechanical strength, tend to be further improved.

The percentage of (B-2) the units having an alicyclic structure to the total of (A) the units derived from a lactam and/or an aminocarboxylic acid and (B-1) the units having no alicyclic structure [(B-2)/{(A) + (B-1)} × 100] is, for example, 0.1 to 97% by weight, preferably 0.5 to 97% by weight, more preferably 1 to 97% by weight. When the percentage of the units having an alicyclic structure is the above-mentioned lower limit or more, the stretchability and heat shrinkability tend to be further improved. When the percentage of the units having an alicyclic structure is the above-mentioned upper limit or less, practical physical properties, such as a mechanical strength, tend to be further improved.

The production of the polyamide resin can be performed in any of a batch-wise manner and a continuous manner, and a known apparatus for producing a polyamide, such as a batch reaction vessel, a single-chamber or multi-chamber continuous reaction apparatus, a tubular continuous reaction apparatus, or a kneading reaction extruder, e.g., a single-screw kneading extruder or a twin-screw kneading extruder, can be used. With respect to the polymerization method, a known method, such as melt polymerization, solution polymerization, or solid phase polymerization, can be used. These polymerization methods can be used individually or appropriately in combination.

In the method for producing the polyamide resin, for example, (A) a lactam and/or an aminocarboxylic acid, (B) an equimolar salt of a diamine and a dicarboxylic acid, and water are charged into a pressure vessel, and subjected to polycondensation in a sealed state under a pressure at a temperature in the range of from 200 to 350°C, and then the pressure in the vessel is reduced and the polycondensation reaction is continued under atmospheric pressure or a reduced pressure at a temperature in the range of from 200 to 350°C to increase the molecular weight, producing an intended polyamide resin. In this instance, equimolar salt (B) of a diamine and a dicarboxylic acid may be charged in the form a solution or a concentrated solution obtained by mixing a diamine and a dicarboxylic acid which are almost equimolar to each other with, for example, water and an alcohol to dissolve them, and then forming a nylon salt to prepare a solution of the salt, or in the form of a nylon salt in a solid state obtained by subjecting the solution to recrystallization. Alternatively, instead of the equimolar salt of a diamine and a dicarboxylic acid, a diamine and a dicarboxylic acid which are almost equimolar to each other may be charged as such into the pressure vessel. For example, charging may be performed in a way such that a diamine and a dicarboxylic acid constituting (B-1) the units having no alicyclic structure are charged in the form of an equimolar salt thereof, and a diamine and a dicarboxylic acid constituting (B-2) the units having an alicyclic structure are charged as such into the pressure vessel. The equimolar mixture of a diamine and a dicarboxylic acid which are almost equimolar to each other substantially corresponds to the equimolar salt.

With respect to the water used in the method for producing the polyamide resin, for example, ion-exchanged water having oxygen removed therefrom, or distilled water is desirably used, and the amount of the water used is, for example, 1 to 150 parts by weight, relative to 100 parts by weight of the raw materials constituting the polyamide resin.

When producing the polyamide resin, if necessary, for promoting the polymerization or preventing oxidation, a phosphorus compound, such as phosphoric acid, phosphorous acid, hypophosphorous acid, polyphosphoric acid, or an alkali metal salt thereof, can be added. The amount of the phosphorus compound added is generally 50 to 3,000 ppm based on the polyamide resin to be obtained. Further, for modifying the molecular weight or stabilizing the melt viscosity of the polyamide resin upon molding, at least one molecular weight modifier selected from the group consisting of monoamines, such as laurylamine and stearylamine; diamines, such as hexamethylenediamine and metaxylylenediamine; monocarboxylic acids, such as acetic acid, stearic acid, and benzoic acid; and dicarboxylic acids, such as adipic acid, isophthalic acid, and terephthalic acid may be added when producing the polyamide resin. These molecular weight modifiers may be added individually or appropriately in combination. When a molecular weight modifier is used, the amount of the molecular weight modifier used varies depending on the reactivity of the molecular weight modifier or the polymerization conditions, but is appropriately determined so that the relative viscosity of the polyamide finally obtained becomes in the range of from 1.5 to 5.0.

With respect to the molecular weight of the polyamide resin, a relative viscosity (ηr), as measured by the method described in JIS K6810, is in the range of from 1.5 to 5.0, preferably 2.0 to 4.5. With respect to the types and concentration of the end groups of the polyamide resin and the molecular weight distribution of the polyamide resin, there is no particular limitation.

The polyamide resin having increased the molecular weight is generally withdrawn in a molten state from the reaction vessel and cooled with, e.g., water, and then processed into a pellet form. In the case of pellets comprised mainly of a polyamide resin containing a large amount of the unreacted monomers, such as nylon 6, it is preferred that the unreacted monomers and others are further removed from the pellets by, for example, washing with hot water and then the resultant pellets are used in, for example, the production of a film.

The polyamide resin can be advantageously used in producing a film. That is, the present invention encompasses the use of the polyamide resin in producing a film.

In the method for producing a film from the polyamide resin, a known method for producing a film, for example, a T-die method using a melt-extruder, an inflation method, a tubular method, a solvent casting method, or a hot pressing method can be applied. The melt temperature for the polyamide in the method using a melt-extruder is, for example, from the melting point of the polyamide used to 320°C.

The film comprising the polyamide resin may be a stretched film. That is, the present invention encompasses the use of the polyamide resin in producing a stretched film. The stretched film can be produced by, for example, stretching the above-mentioned film.

The stretching may be at least uniaxial stretching, and, according to the use of the film, for example, a uniaxial stretching method, a simultaneous biaxial stretching method, or a successive biaxial stretching method can be appropriately selected. Especially when a film is produced by a successive biaxial stretching method, if necessary, for example, a lubricant, such as potassium stearate, a bisamide compound, silica, or talc, a slip agent, or a nucleating agent is added to the polyamide resin to obtain a resin composition, and then the resin composition is melt-extruded by means of an extruder having a T-die to form an unstretched film. The unstretched film may be successively stretched in the subsequent step, or may be once wound up and then stretched.

The stretching is conducted at the glass transition temperature (hereinafter, referred to as "Tg") of the polyamide resin used or higher. In the 1st-stage stretching (primary stretching) of the successive biaxial stretching, the film is stretched in the extrusion direction of the film at a temperature in the range of from Tg to (Tg + 50)°C with a stretch ratio of 2 to 5 times, preferably 2.5 to 4 times. Then, in the 2nd-stage stretching (secondary stretching), the film is stretched in the direction perpendicular to the extrusion direction of the film at the same temperature as or a temperature slightly higher than that for the primary stretching with a stretch ratio of 2 to 5 times, preferably 2.5 to 4 times. Then, the resultant film is subjected to step for heat setting at a temperature of 150°C or higher, producing a successive biaxial stretched film.

The stretched film comprising the polyamide resin of the present invention preferably has a hot-water shrinkage percentage of 20 to 60%, more preferably 22 to 60%, further preferably 25 to 60%. Fully utilizing high hot-water shrinkage percentage, the stretched film comprising the polyamide resin of the present invention can be advantageously used as a packaging material, particularly as a food packaging material.

In the polyamide resin, for example, a heat stabilizer, an ultraviolet light absorber, a light stabilizer, an antioxidant, an antistatic agent, a tackifier, a sealing property improving agent, an anti-fogging agent, a release agent, an impact resistance improving agent, a plasticizer, a pigment, a dye, a perfume, or a reinforcing material can be added in such an amount that the effects of the present invention are not sacrificed.

### EXAMPLES

Hereinbelow, the present invention will be described in detail with reference to the following Examples and Comparative Examples, which should not be construed as limiting the scope of the present invention. The measurement values shown in the following Examples and Comparative Examples were measured by the methods described below.

### (1) Measurement of ηr (relative viscosity) of a polyamide resin

In accordance with JIS K6810, using 96% by weight concentrated sulfuric acid as a solvent, a relative viscosity was measured at a polyamide concentration of 1 weight/volume % using an Ubbelohde viscometer at a temperature of 25°C.

### (2) Measurement of a hot-water shrinkage percentage

A distance (= L) between gage marks down on a film was measured, and then the film in a tension-free state was placed in hot water at 90°C for one minute, and a shrinkage (= ΔL) was measured from the gage marks on the resultant film, and a shrinkage percentage (%) = ΔL/L × 100 was determined.

### (3) Measurement of a penetration strength

A test specimen was subjected to moisture conditioning under conditions at 50% RH at 23°C for 24 hours, and, under the same conditions using Tensilon UTM-III-200, manufactured by TOYO BALDWIN, a maximum load was measured at a time when a needle having a tip diameter of 0.5 mm penetrated the test specimen at a speed of 50 mm/min, and a penetration strength was determined as a value obtained by dividing the measured maximum load by the thickness (mm) of the test specimen.

### (Example 1)

Into a 5-liter pressure vessel equipped with a stirrer, a thermometer, a torque meter, a pressure gage, a nitrogen gas introducing inlet, a pressure release port, a pressure controller, and a polymer withdrawal outlet were charged 1,064.01 g of ε-caprolactam (82% by weight), 416.50 g of a 50% aqueous solution of an equimolar salt of hexamethylenediamine (HMD) and adipic acid (AA) (equimolar salt of HMD and AA: 16% by weight), 10.46 g of HMD, 15.49 g of 1,4-cyclohexanedicarboxylic acid (CHDA, manufactured by Tokyo Chemical Industry Co., Ltd.; cis-isomer/trans-isomer ratio is 77/23) (wherein the HMD:CHDA molar ratio is 1:1) (2% by weight), and 0.065 g of sodium hypophosphite, and a series of applying a pressure to the vessel using nitrogen gas and releasing the pressure was repeated several times, and the pressure vessel was purged with nitrogen gas, followed by gradual heating. Stirring was performed at a speed of 50 rpm. The temperature in the vessel was elevated from room temperature to 240°C over 2 hours, and polymerization was conducted at 240°C for 2 hours, and then the pressure in the vessel was released to a gage pressure of 0 MPa and subsequently, while flowing nitrogen gas at 260 ml/minute, polymerization was conducted at 240°C for 2.7 hours to obtain a polyamide. After completion of the polymerization, stirring was stopped, and a colorless and transparent polyamide in a molten state was withdrawn in a string form from the polymer withdrawal outlet, and water-cooled and then subjected to pelletization to obtain pellets. The pellets were washed in hot water while stirring for 6 hours so as to remove the unreacted monomers, followed by vacuum drying at 110°C for 72 hours. The obtained polyamide had an ηr of 3.8.

From about 2 g of the obtained polyamide, an unstretched film having a thickness of 100 µm was formed using a press molding machine under conditions at 260°C.

Gage marks (distance: 50 mm) were drawn on a specimen having a length of 90 mm and a width of 10 mm cut out from the formed unstretched film, and the specimen was set to a tensile tester (Tensilon RTA-10KN, manufactured by Orientec Co., Ltd.) and preheated at an atmosphere temperature of 80°C (temperature upon stretching) for about one minute, and then stretched at the same temperature with a ratio of 2.7 times in the longitudinal direction of the film at a deformation speed of 150 mm/minute. The resultant stretched film was allowed to stand in an atmosphere at 50% RH at 23°C for one day, and then a hot-water shrinkage percentage was measured. As a result, the hot-water shrinkage percentage was found to be 23%. The results are shown in Table 1.

### (Example 2)

1,066.00 g of ε-caprolactam (82% by weight), 416.05 g of a 50% aqueous solution of an equimolar salt of HMD and AA (equimolar salt of HMD and AA: 16% by weight), 12.93 g of isophoronediamine (IPD, manufactured by Hüls Japan Co., Ltd.; trade name: VESTAMIN IPD), and 13.06 g of CHDA (wherein the IPD:CHDA molar ratio is 1:1) (2% by weight) were charged, and the same procedure as in Example 1 was conducted to obtain a polyamide. The obtained polyamide had an ηr of 4.1. From the polyamide, an unstretched film and a stretched film were formed by the same method as in Example 1, and a hot-water shrinkage percentage was measured. As a result, the hot-water shrinkage percentage was found to be 24%. The results are shown in Table 1.

### (Example 3)

1,065.99 g of ε-caprolactam (82% by weight), 208.13 g of a 50% aqueous solution of an equimolar salt of HMD and AA (equimolar salt of HMD and AA: 8% by weight), 64.68 g of IPD, and 65.41 g of CHDA (wherein the IPD:CHDA molar ratio is 1:1) (10% by weight) were charged, and the same procedure as in Example 1 was conducted to obtain a polyamide. The obtained polyamide had an ηr of 3.8. From the polyamide, an unstretched film and a stretched film were formed by the same method as in Example 1, and a hot-water shrinkage percentage was measured. As a result, the hot-water shrinkage percentage was found to be 29%. The results are shown in Table 1.

### (Example 4)

975.00 g of ε-caprolactam (75% by weight), 597.95 g of a 50% aqueous solution of an equimolar salt of HMD and AA (equimolar salt of HMD and AA: 23% by weight), 10.48 g of HMD, and 15.52 g of CHDA (wherein the HMD:CHDA molar ratio is 1:1) (2% by weight) were charged, and the same procedure as in Example 1 was conducted to obtain a polyamide. The obtained polyamide had an ηr of 4.1. From the polyamide, an unstretched film and a stretched film were formed by the same method as in Example 1, and a hot-water shrinkage percentage was measured. As a result, the hot-water shrinkage percentage was found to be 28%. The results are shown in Table 1.

### (Example 5)

990.03 g of ε-caprolactam (75% by weight), 607.22 g of a 50% aqueous solution of an equimolar salt of HMD and AA (equimolar salt of HMD and AA: 23% by weight), 14.21 g of IPD, and 12.19 g of AA (wherein the IPD:AA molar ratio is 1:1) (2% by weight) were charged, and the same procedure as in Example 1 was conducted to obtain a polyamide. The obtained polyamide had an ηr of 4.3. From the polyamide, an unstretched film and a stretched film were formed by the same method as in Example 1, and a hot-water shrinkage percentage was measured. As a result, the hot-water shrinkage percentage was found to be 27%. The results are shown in Table 1.

### (Example 6)

1,018.50 g of ε-caprolactam (75% by weight), 624.68 g of a 50% aqueous solution of an equimolar salt of HMD and AA (equimolar salt of HMD and AA: 23% by weight), 13.51 g of IPD, and 13.64 g of CHDA (wherein the IPD:CHDA molar ratio is 1:1) (2% by weight) were charged, and the same procedure as in Example 1 was conducted to obtain a polyamide. The obtained polyamide had an ηr of 3.9. From the polyamide, an unstretched film and a stretched film were formed by the same method as in Example 1, and a hot-water shrinkage percentage was measured. As a result, the hot-water shrinkage percentage was found to be 26%. The results are shown in Table 1.

### (Example 7)

912.80 g of ε-caprolactam (70% by weight), 730.18 g of a 50% aqueous solution of an equimolar salt of HMD and AA (equimolar salt of HMD and AA: 28% by weight), 12.97 g of IPD, and 13.11 g of CHDA (wherein the IPD:CHDA molar ratio is 1:1) (2% by weight) were charged, and the same procedure as in Example 1 was conducted to obtain a polyamide. The obtained polyamide had an ηr of 4.3. From the polyamide, an unstretched film and a stretched film were formed by the same method as in Example 1, and a hot-water shrinkage percentage was measured. As a result, the hot-water shrinkage percentage was found to be 36%. The results are shown in Table 1.

### (Comparative Example 1)

Substantially the same procedure as in Example 1 was conducted except that 1,066.00 g of ε-caprolactam (82% by weight) and 468.00 g of a 50% aqueous solution of an equimolar salt of HMD and AA (equimolar salt of HMD and AA: 18% by weight) were charged, and that the diamine and dicarboxylic acid having an alicyclic structure were not used, obtaining a polyamide. The obtained polyamide had an ηr of 4.0. From the polyamide, an unstretched film and a stretched film were formed by the same method as in Example 1, and a hot-water shrinkage percentage was measured. As a result, the hot-water shrinkage percentage was found to be 19%. The results are shown in Table 1.

### (Comparative Example 2)

Substantially the same procedure as in Example 1 was conducted except that 975.00 g of ε-caprolactam (75% by weight) and 650.00 g of a 50% aqueous solution of an equimolar salt of HMD and AA (equimolar salt of HMD and AA: 25% by weight) were charged, and that the diamine and dicarboxylic acid having an alicyclic structure were not used, obtaining a polyamide. The obtained polyamide had an ηr of 4.4. From the polyamide, an unstretched film and a stretched film were formed by the same method as in Example 1, and a hot-water shrinkage percentage was measured. As a result, the hot-water shrinkage percentage was found to be 22%. The results are shown in Table 1.

### (Comparative Example 3)

Substantially the same procedure as in Example 1 was conducted except that 910.00 g of ε-caprolactam (70% by weight) and 780.00 g of a 50% aqueous solution of an equimolar salt of HMD and AA (equimolar salt of HMD and AA: 30% by weight) were charged, and that the diamine and dicarboxylic acid having an alicyclic structure were not used, obtaining a polyamide. The obtained polyamide had an ηr of 4.0. From the polyamide, an unstretched film and a stretched film were formed by the same method as in Example 1, and a hot-water shrinkage percentage was measured. As a result, the hot-water shrinkage percentage was found to be 30%. The results are shown in Table 1.

### (Example 8)

Into a 70-liter pressure vessel equipped with a stirrer, a thermometer, a pressure gage, a pressure controller, a nitrogen gas introducing inlet, a pressure release port, and a polymer withdrawal outlet were charged 18,859 g of ε-caprolactam (82% by weight), 3,679 g of a 50% aqueous solution of an equimolar salt of HMD and AA (equimolar salt of HMD and AA: 8% by weight), 1,146 g of IPD, 1,157 g of CHDA (wherein the IPD:CHDA molar ratio is 1:1) (10% by weight), 1.2 g of sodium hypophosphite, and 2,161 g of distilled water, and a series of applying a pressure to the vessel using nitrogen gas and releasing the pressure was repeated several times, and the pressure vessel was purged with nitrogen gas and then the temperature in the vessel was elevated to 240°C. Polymerization was conducted at 240°C for 2 hours, and then the pressure in the vessel was released to a gage pressure of 0 MPa and subsequently, while flowing nitrogen gas at 260 L/h, polymerization was conducted at 240°C for 2.9 hours to obtain a polyamide. After completion of the polymerization, stirring was stopped, and a colorless and transparent polyamide in a molten state was withdrawn in a string form from the polymer withdrawal outlet, and water-cooled and then subjected to pelletization to obtain pellets. The pellets were washed under a flow of hot water for 12 hours so as to remove the unreacted monomers, followed by vacuum drying at 110°C for 12 hours. The obtained polyamide had an ηr of 3.9.

The obtained polyamide was melt-extruded from a T-die at a molding temperature of 260°C using a φ 40 mm T-die casting machine, manufactured by PLABO, and cooled at a first roll temperature of 40°C, followed by formation of unstretched films having film thicknesses of 50 µm and 100 µm. The 50 µm unstretched film was subjected directly to measurement of a penetration strength. The 100 µm unstretched film was subjected to simultaneous biaxial stretching with a stretch ratio of 2.7 × 2.7 times at a stretching speed of 150 mm/sec at a stretching temperature of 80°C using BIX703 Lab stretching machine, manufactured by Iwamoto Seisakusho Co., Ltd., and then subjected to heat treatment with air heated at 120°C to form a biaxial stretched film having a thickness of 25 µm. The resultant stretched film was allowed to stand in an atmosphere at 50% RH at 23°C for one day, and then a hot-water shrinkage percentage was measured. As a result, the hot-water shrinkage percentage was found to be 39%. The results are shown in Table 2.

### (Example 9)

15,000 g of ε-caprolactam (75% by weight), 4,000 g of a 50% aqueous solution of an equimolar salt of HMD and AA (equimolar salt of HMD and AA: 10% by weight), 1,615 g of IPD, 1,385 g of AA (wherein the IPD:AA molar ratio is 1:1) (15% by weight), 1.2 g of sodium hypophosphite, and 2,000 g of distilled water were charged, and the same procedure as in Example 8 was conducted to obtain a polyamide. The obtained polyamide had an ηr of 3.7. From the polyamide, an unstretched film and a stretched film were formed by the same method as in Example 8, and a hot-water shrinkage percentage was measured. As a result, the hot-water shrinkage percentage was found to be 46%. The results are shown in Table 2.

### (Comparative Example 4)

Substantially the same procedure as in Example 8 was conducted except that 18,860 g of ε-caprolactam (82% by weight) and 8,280 g of a 50% aqueous solution of an equimolar salt of HMD and AA (equimolar salt of HMD and AA: 18% by weight) were charged, and that the diamine and dicarboxylic acid having an alicyclic structure were not used, obtaining a polyamide. The obtained polyamide had an ηr of 4.0. From the polyamide, an unstretched film and a stretched film were formed by the same method as in Example 8, and a hot-water shrinkage percentage was measured. As a result, the hot-water shrinkage percentage was found to be 35%. The results are shown in Table 2.

### (Comparative Example 5)

Substantially the same procedure as in Example 8 was conducted except that 17,250 g of ε-caprolactam (75% by weight) and 11,500 g of a 50% aqueous solution of an equimolar salt of HMD and AA (equimolar salt of HMD and AA: 25% by weight) were charged, and that the diamine and dicarboxylic acid having an alicyclic structure were not used, obtaining a polyamide. The obtained polyamide had an ηr of 4.4. From the polyamide, an unstretched film and a stretched film were formed by the same method as in Example 8, and a hot-water shrinkage percentage was measured. As a result, the hot-water shrinkage percentage was found to be 41%. The results are shown in Table 2.

**[Table 1]**

| | Composition of polyamide (% by weight) | | | Diamine | Dicarboxylic acid | Hot-water shrinkage percentage (%) |
|---|---|---|---|---|---|---|
| | PA6*¹ | PA66 *² | Diamine/ dicarboxylic acid | | | |
| Comparative Example 1 | 82 | 18 | 0 | - | - | 19 |
| Example 1 | 82 | 16 | 2 | HMD | CHDA | 23 |
| Example 2 | 82 | 16 | 2 | IPD | CHDA | 24 |
| Example 3 | 82 | 8 | 10 | IPD | CHDA | 29 |
| Comparative Example 2 | 75 | 25 | 0 | - | - | 22 |
| Example 4 | 75 | 23 | 2 | HMD | CHDA | 28 |
| Example 5 | 75 | 23 | 2 | IPD | AA | 27 |
| Example 6 | 75 | 23 | 2 | IPD | CHDA | 26 |
| Comparative Example 3 | 70 | 30 | 0 | - | - | 30 |
| Example 7 | 70 | 28 | 2 | IPD | CHDA | 36 |

| | | | | | | |
|---|---|---|---|---|---|---|
| *1: ε-Caprolactam *2: Equimolar salt of hexamethylenediamine and adipic acid | | | | | | |

**[Table 2]**

| | Composition of polyamide (% by weight) | | | Diamine | Dicarboxylic acid | Hot-water shrinkage percentage (%) | Penetration strength (N/mm) |
|---|---|---|---|---|---|---|---|
| | PA6 *¹ | PA66 *² | Diamine/ dicarboxylic acid | | | | |
| Comparative Example 4 | 82 | 18 | 0 | - | - | 35 | 224 |
| Example 8 | 82 | 8 | 10 | IPD | CHDA | 39 | 244 |
| Comparative Example 5 | 75 | 25 | 0 | - | - | 41 | 204 |
| Example 9 | 75 | 10 | 15 | IPD | AA | 46 | 236 |

| | | | | | | | |
|---|---|---|---|---|---|---|---|
| *1: ε-Caprolactam *2: Equimolar salt of hexamethylenediamine and adipic acid | | | | | | | |

## Claims

1. A polyamide resin containing three or more types of units,
the polyamide resin comprising:
(A) units derived from a lactam and/or an aminocarboxylic acid; and
(B) units derived from an equimolar salt of a diamine and a dicarboxylic acid,
wherein (B) the units derived from an equimolar salt of a diamine and a dicarboxylic acid comprise:
(B-1) units having no alicyclic structure; and
(B-2) units having an alicyclic structure.

2. The polyamide resin according to claim 1, wherein (A) the units derived from a lactam and/or an aminocarboxylic acid are contained in an amount of 50 to 98% by weight, and
(B-2) the units having an alicyclic structure are contained in an amount of 1 to 49% by weight, based on the weight of the all units of the polyamide resin.

3. The polyamide resin according to claim 1 or 2, wherein (B-1) the units having no alicyclic structure are units derived from an equimolar salt of hexamethylenediamine and adipic acid.

4. The polyamide resin according to any one of claims 1 to 3, wherein (B-2) the units having an alicyclic structure contain a partial structure derived from a branched alicyclic diamine.

5. The polyamide resin according to claim 4, wherein the branched alicyclic diamine comprises cis-1-amino-3-aminomethyl-3,5,5-trimethylcyclohexane and/or trans-1-amino-3-aminomethyl-3,5,5-trimethylcyclohexane.

6. The polyamide resin according to any one of claims 1 to 5, wherein (B-2) the units having an alicyclic structure contain a partial structure derived from cis-1,4-cyclohexanedicarboxylic acid and/or trans-1,4-cyclohexanedicarboxylic acid.

7. A film comprising the polyamide resin according to any one of claims 1 to 6.

8. A film having excellent heat shrinkability, which comprises the film according to claim 7.

9. A stretched film comprising the polyamide resin according to any one of claims 1 to 6.

10. A stretched film having excellent heat shrinkability, which comprises the stretched film according to claim 9.

11. A stretched film which is obtained by stretching the film according to claim 7.

12. A stretched film having excellent heat shrinkability, which comprises the stretched film according to claim 11.

13. The stretched film according to claim 11, which has a hot-water shrinkage percentage of 20 to 60%.

14. A packaging material comprising the stretched film according to claim 13.

## Amended claims

### Amended claims under Art. 19.1 PCT

1. A polyamide resin containing three or more types of units,
the polyamide resin comprising:
(A) units derived from a lactam and/or an aminocarboxylic acid; and
(B) units derived from an equimolar salt of a diamine and a dicarboxylic acid,
wherein (B) the units derived from an equimolar salt of a diamine and a dicarboxylic acid comprise:
(B-1) units having no alicyclic structure; and
(B-2) units having an alicyclic structure, and
wherein (B-2) the units having an alicyclic structure comprise at least dicarboxylic acid units having an alicyclic structure.

2. The polyamide resin according to claim 1, wherein (B-2) the units having an alicyclic structure consist of dicarboxylic acid units having an alicyclic structure.

3. The polyamide resin according to claim 1, wherein (B-2)the units having an alicyclic structure comprise diamine units having an alicyclic structure and dicarboxylic acid units having an alicyclic structure.

4. The polyamide resin according to any one of claims 1 to 3, wherein (A) the units derived from a lactam and/or an aminocarboxylic acid are contained in an amount of 50 to 98% by weight, and
(B-2) the units having an alicyclic structure are contained in an amount of 1 to 49% by weight, based on the weight of the all units of the polyamide resin.

5. The polyamide resin according to any one of claims 1 to 4, wherein (B-1) the units having no alicyclic structure are units derived from an equimolar salt of hexamethylenediamine and adipic acid.

6. The polyamide resin according to any one of claims 1 to 5, wherein (B-2) the units having an alicyclic structure contain a partial structure derived from a branched alicyclic diamine.

7. The polyamide resin according to claim 46, wherein the branched alicyclic diamine comprises cis-1-amino-3-aminomethyl-3,5,5-trimethylcyclohexane and/or trans-1-amino-3-aminomethyl-3,5,5-trimethylcyclohexane.

8. The polyamide resin according to any one of claims 1 to 7, wherein (B-2) the units having an alicyclic structure contain a partial structure derived from cis-1,4-cyclohexanedicarboxylic acid and/or trans-1,4-cyclohexanedicarboxylic acid.

9. A film comprising the polyamide resin according to any one of claims 1 to 68.

10. A film having excellent heat shrinkability, which comprises the film according to claim 9.

11. A stretched film comprising the polyamide resin according to any one of claims 1 to 68.

12. A stretched film having excellent heat shrinkability, which comprises the stretched film according to claim 911.

13. A stretched film which is obtained by stretching the film according to claim 9.

14. A stretched film having excellent heat shrinkability, which comprises the stretched film according to claim 13.

15. The stretched film according to claim 13, which has a hot-water shrinkage percentage of 20 to 60%.

16. A packaging material comprising the stretched film according to claim 15.
